# EUROPÄISCHE PATENTSCHRIFT

(11) **EP 1 817 512 B1**
(45) Veröffentlichungstag und Bekanntmachung des Hinweises auf die Patenterteilung: **10.12.2008**
(21) Anmeldenummer: 05803441.4
(22) Anmeldetag: 03.11.2005
(51) Int. Cl.: F16H 57/04

(54) **ZAHNRADANORDNUNG**
TOOTHED WHEEL ARRANGEMENT
SYSTEME DE ROUE DENTEE

(30) Priorität: 02.12.2004 DE 102004058056
(43) Veröffentlichungstag der Anmeldung: 15.08.2007
(73) Patentinhaber: Oerlikon Leybold Vacuum GmbH, 50968 Köln (DE)
(72) Erfinder: GIEBMANNS, Wolfgang, 50374 Erftstadt (DE)
(74) Vertreter: von Kirschbaum, Alexander
(86) Internationale Anmeldenummer: PCT/EP2005/055727
(87) Internationale Veröffentlichungsnummer: WO 2006/058814

(56) Entgegenhaltungen:
- DE-A1- 19 757 855
- SE-A- 0 301 565

## Beschreibung

Die Erfindung betrifft eine Zahnradanordnung, die in Getrieben verschiedenartigster Maschinen eingesetzt werden kann, insbesondere bei schnelldrehenden Übersetzungs- oder Untersetzungs-Leistungsgetrieben, wie sie beispielsweise bei Turbomaschinen oder auch bei synchronisierten Zweiwellenmaschinen, wie Schrauben- und Wälzkolbenpumpen, Verwendung finden. Ferner betrifft die Erfindung eine Getriebeanordnung sowie eine Schraubenpumpe, die insbesondere zur Erzeugung von Vakuum geeignet ist.

Bei schnelldrehenden Getrieben ist die Schmierung des Zahneingriffs von großer Bedeutung. Wenn in einfachen Getrieben oft die ohnehin für die Lagerschmierung erforderliche Schmierung durch Ölnebel im Getrieberaum, z. B. erzeugt durch herumwirbelndes Öl, ausreichend ist, kann mit steigenden Drehzahlen bzw. Umfangsgeschwindigkeiten eine ungenügende Beölung der Zahnflanken erfolgen, die außer zu starken Geräuschen auch zu verstärktem Verschleiß der Zahnflanken bis hin zum Zahnbruch führen kann. Aus diesem Grunde kann bei schnelllaufenden Getrieben eine Zwangsschmierung erforderlich werden, mit der außer einer guten Zahnflankenbeölung auch Kühlung und Dämpfung im Zahneingriff sichergestellt werden kann. Dabei ist es erforderlich, nur kurz vor dem Ineinanderrollen der Zahnkränze zweier Zahnräder Öl so beizustellen, dass es genau im Zahneingriff schmierend, kühlend und dämpfend wirken kann. Aus dieser Anforderung heraus sind verschiedenste Schmierungskonzepte entwickelt worden.

Bei der Tropfenschmierung durch Abtropfen von abgeschleudertem Öl an Abtropfkanten wird die Gravitation in der Form genutzt, dass eine Abtropfkante oberhalb einer Zahnradpaarung so angebracht wird, dass die Öltropfen auf die Zähne zweier ineinandergedrehter Zahnräder fallen, kurz bevor diese in Zahneingriff kommen. Dieses Prinzip kann einfach durch eine entsprechende Gehäusegestaltung realisiert werden, wobei das Öl durch eine Schleuderscheibe aus dem Ölsumpf heraus an die Gehäusewände geschleudert wird, um dann entlang der Gehäusewand zur Abtropfkante zu gelangen. Da diese Schmierungsart von der Gravitationswirkrichtung abhängig ist, kann sie nur in bestimmten Einbaulagen angewendet werden, wobei zusätzlich eine Einschränkung der Drehrichtung für die Zahnräder besteht, denn die Beölung kommt auch nur bei ineinanderdrehenden Verzahnungen zur vollen Wirkung, denn bei auseinandergedrehten Zahnrädern würde das Öl während des Zahnradumlaufs bereits wieder abgeschleudert, bevor es dann in den Zahneingriff gelangen könnte.

Die Tropfenschmierung durch Abtropfen aus Förderleitungen bei geringem Öldruck entspricht dem oben beschriebenen Wirkungsprinzip mit Ausnahme der Ölzuführung. Durch eine schwachfördernde Ölpumpe wird das Öl über eine Rohrleitung direkt zum Zahneingriff geführt, wo die Öltropfen, wie bei der obigen Abtropfkante, auf die Zähne der ineinandergedrehten Zahnräder fallen. Auch wenn bei dieser Beölungsart wiederum die Gravitationswirkrichtung berücksichtig werden muss, so kann aber die Ölpumpe an beliebiger Stelle vorgesehen werden, wobei über ein entsprechendes Rohrleitungssystem auch mehrere Zahnradpaare und auch Lager mit Öl versorgt werden können. Verglichen zum vorherigen Prinzip ist diese Schmierungsart zwar etwas aufwendiger, doch ihre Vorteile bezüglich Pumpenort und Anzahl der Schmierstellen lassen auch diese Ölschmierung häufig zur Anwendung kommen.

Die Ölnebelschmierung mit intensivem Ölnebel kann auch bei höheren Drehzahlen angewendet werden, wenn durch große Ölmengen und hohe Abspritzgeschwindigkeiten ein stark verwirbeltes Öl-/Luftgemisch den gesamten Getrieberaum durchströmt und hierdurch alle Schmierstellen, wie Lager und Zahnräder, in ausreichender Intensität erreicht. Bei einer derartigen Ölnebelschmierung müssen jedoch größere Ölmengen umgewälzt werden. Ferner kann es zu Schmiermittelunterversorgung an einzelnen Zahnrädern kommen, beispielsweise wenn die Ölnebel nur schwer zugänglich sind.

Bei hochtourigen Getrieben mit mehreren hintereinander angeordneten Zahnrädern lässt sich die Einbaulage oft nicht mehr so gestalten, dass eine gezielte Tropfenschmierung angewendet werden kann. Wenn in solchen Fällen eine Ölnebel-Schmierung nicht mehr genügt, ist eine Spritzschmierung erforderlich, bei der durch Rohrleitungssysteme Drucköl gezielt in die jeweiligen Zahneingriffe gespritzt wird. Dies kann zu einer sehr aufwändigen Leitungsgestaltung führen, die mit größeren Kosten verbunden ist.

In schnelllaufenden Getrieben mit kleinen Zahnrädern kann das Drucköl in eine rotierende Welle gespritzt werden, deren betreffende zentrale Bohrung das Öl zu einem Zahnrad führt, das dann dieses Öl über ein im Zahnrad eingebrachtes Bohrungssystem jeweils so zwischen zwei Zähne bringt, dass im Zahneingriff eine größere Ölmenge zur Schmierung und Kühlung vorhanden ist.

Diese Schmierungsart findet häufig in Planetengetrieben von Kleingasturbinen (z. B. Hilfsgasturbinen, sogenannte APU in Flugzeugen) Anwendung, bei denen eine sehr hohe Turbinendrehzahl (z. B. 40.000 bis 80.000 U/min) über ein kleinbauendes Planetengetriebe auf eine relativ geringe Abtriebsdrehzahl (z. B. 8.000 bis 12.000 U/min) gebracht werden muss. Beispielsweise wird in einem Planetengetriebe, welches aus einem mit dem Turbinenrotor verbundenen Sonnenrad, drei achsfesten doppelstufigen Planetenrädern und einem abtriebseitigen Hohlrad besteht, Öl so in das Sonnenrad und in die Achsen der Stufenplaneten gespritzt, dass über die jeweiligen Bohrungssysteme jeder Zahneingriff direkt geschmiert wird.

In Abhängigkeit von der jeweiligen Zähnezahl und dem betreffenden Fußkreisdurchmesser ist eine Vielzahl von kleinen tiefen Bohrungen (z. B. mit einem Durchmesser von 1 mm und einer Länge von 15 mm) erforderlich, die die Zahnradfertigung an die Grenze der Machbarkeit führen können und zudem erhebliche Kosten verursachen. Ferner sind derartige Zahnräder auf kleine Baugrößen beschränkt.

Aus DE 197 57 855 ist das Vorsehen von zwei Scheiben auf einer Welle bekannt, wobei die Scheiben einen Hohlraum ausbilden, der unmittelbar über eine Querbohrung in der Welle mit Schmiermittel gefüllt wird. Eine der beiden Scheiben weist eine mit dem Hohlraum verbundene Düse auf, durch die Schmiermittel in Richtung der Zähne eines Zahnrads gespritzt wird.

Aufgabe der Erfindung ist es, eine Zahnradanordnung mit einer kostengünstigen und zuverlässigen Schmierung zu schaffen.

Die Lösung der Aufgabe erfolgt erfindungsgemäß durch eine Zahnradanordnung gemäß Anspruch 1.

Die erfindungsgemäße Zahnradanordnung weist ein auf einer Welle drehfest angeordnetes Zahnrad auf. In der Welle ist ein Kanalsystem zur Schmierstoffdurchleitung vorgesehen. Hierbei weist das Kanalsystem beispielsweise eine zentrale Mittelbohrung auf, zu der der Schmierstoff, beispielsweise Schmieröl, zugeführt wird. Ferner kann das Kanalsystem eine oder mehrere radial verlaufende Bohrungen aufweisen, die mit der zentralen Mittelbohrung verbunden sind. Da der Schmierstoff in Richtung der Zähne des Zahnrades gefördert werden soll, weist das Kanalsystem in jedem Fall zumindest eine, vorzugsweise mehrere Austrittsöffnungen an dem Wellenumfang auf.

Erfindungsgemäß ist auf der Welle benachbart zu dem Zahnrad eine Scheibe angeordnet. Hierbei erfolgt die Anordnung der Scheibe derart, dass zwischen dem Zahnrad und der Scheibe zumindest teilweise ein Radialspalt ausgebildet ist. Der Radialspalt ist mit der Austrittsöffnung verbunden. Ein aus der Austrittsöffnung austretender Schmierstoff gelangt somit in den Radialspalt und auf Grund der Rotationsbewegung in einen Bereich der Zahnradzähne, in dem der Radialspalt endet.

Durch die erfindungsgemäße Ausbildung des Radialspaltes erfolgt auf einfache Weise ein Fördern des Schmierstoffs im Wesentlichen in radialer Richtung zu den Zahnrad-Zähnen. Das Vorsehen aufwändig herzustellender Radialbohrungen in dem Zahnrad, die jeweils im Zahngrund enden, ist somit nicht erforderlich. Hierdurch werden die Herstellungskosten erheblich reduziert. Ferner weist das erfindungsgemäße Vorsehen einer Scheibe zur Ausbildung des Radialspalts den Vorteil auf, dass dies auch bei großen Zahnrad-Durchmessern realisiert werden kann. Da Radialbohrungen zur Schmierstoffförderung in dem Zahnrad nicht mehr erforderlich sind, ist die erfindungsgemäße Schmiermittelzufuhr unabhängig von den Zahnformen. Die erfindungsgemäße Schmiermittelzufuhr kann somit auch bei Zahnrädern verwendet werden, die beispielsweise als Evolventenverzahnung ausgeführt ist, oder eine Geradverzahnung, eine Schrägverzahnung oder auch eine Pfeilverzahnung aufweisen.

Vorzugsweise ist eine Staukammer ausgebildet, die sich an den Radialspalt anschließt. Die Staukammer ist somit im Bereich der Zahnrad-Zähne vorgesehen und vorzugsweise derart ausgebildet, dass ein Wegschleudern des Schmiermittels im Wesentlichen vermieden wird. Dies bedeutet, dass das Schmiermittel am Zahnradeingriff zu einem Großteil an den in Eingriff befindlichen Zahnflanken entlanggeleitet wird. Kurz bevor der Zahneingriff erfolgt, wird durch das erfindungsgemäße Vorsehen einer Staukammer ein erheblich größerer Teil an Schmiermittel zu den Zahnflanken geleitet. In den Bereichen, in denen die Zähne eines Zahnrads nicht mit Zähnen eines benachbarten Zahnrads in Eingriff sind, erfolgt vorzugsweise ein freies Abspritzen des Schmiermittels. Es erfolgt somit kein unerwünschter negativer Druckaufbau in Bereichen, in denen eine Zahnschmierung nicht erforderlich ist. Durch die Staukammer wird das Schmiermittel erfindungsgemäß im Bereich der Zähne zurückgehalten und in Richtung der Zähne gelenkt. Durch das Vorsehen der Staukammer ist gewährleistet, dass zumindest ein Großteil des Schmiermittels durch die Verzahnung hindurchgeführt wird.

Vorzugsweise ist die Staukammer durch die Scheibe, bzw. einen entsprechenden Ansatz der Scheibe, und ein mit dem Zahnrad kämmenden Zahnrad gebildet. Ebenso kann die Staukammer auch durch eine mit dem kämmenden Zahnrad verbundene zweite Scheibe zusammen mit der ersten Scheibe gebildet werden.

Bei der Scheibe kann es sich um ein gesondertes Bauteil, jedoch auch um ein einstückig zusammen mit dem Zahnrad ausgebildetes Bauteil handeln.

Bei den miteinander kämmenden Zahnrädern kann es sich auch um Kegelzahnräder oder andere Sonderformen handeln.

Zur Ausbildung des Radialspalts, der vorzugsweise ringförmig ausgebildet ist, sind vorzugsweise zwischen dem Zahnrad und der Scheibe Abstandshalter vorgesehen. Bei den Abstandshaltern kann es sich um separate Bauteile handeln. Vorzugsweise sind die Abstandshalter als Ansätze des Zahnrads und/oder der Scheibe ausgebildet. Hierdurch ist es insbesondere möglich, das Zahnrad zusammen mit der Scheibe gemeinsam auf der Welle zu montieren und beispielsweise durch eine Mutter zusammen auf der Welle zu fixieren. Hierdurch ist die Montage erheblich vereinfacht.

Vorzugsweise ist zumindest einer der Abstandshalter derart angeordnet, dass er in radialer Richtung der an dem Wellenumfang vorgesehenen mindestens einen Austrittsöffnung des Kanalsystems gegenüberliegend angeordnet ist. Hierdurch ist eine Verteilung des Schmiermittels in dem Radialspalt gewährleistet. Der Abstandshalter dient somit zusätzlich als Prallwand. Besonders bevorzugt ist es, dass mehrere Austrittsöffnungen vorgesehen sind, wobei vorzugsweise gegenüber jeder Austrittsöffnung ein Abstandshalter angeordnet ist, um eine breit gefächerte Verteilung zu erwirken.

Vorzugsweise ist zwischen der mindestens einen Auslassöffnung und dem Radialspalt ein vorzugsweise ringförmiger, die Welle umgebender Sammelraum ausgebildet. Durch das Vorsehen des Sammelraums ist sichergestellt, dass stets eine ausreichende Menge an Schmiermittel zur Förderung zu den Zähnen vorhanden ist und eine über dem Umfang gleichmäßige Verteilung erwirkt wird. Dies ist insbesondere beim Anlauf der Zahnradanordnung vorteilhaft.

Ferner betrifft die Erfindung eine Getriebeanordnung nach Anspruch 9, die beispielsweise für Schraubenpumpen geeignet ist, wobei die Schraubenpumpen vorzugsweise zur Vakuumerzeugung eingesetzt werden. Die erfindungsgemäße Getriebeanordnung weist zwei kämmende Zahnradanordnungen auf, die wie vorstehend beschrieben ausgebildet sind. Erfindungsgemäß ist die sich an die beiden Radialspalten anschließende Staukammer als eine gemeinsame Staukammer ausgebildet. Hierbei ist die gemeinsame Staukammer durch die beiden Scheiben gebildet.

Ferner betrifft die Erfindung eine Schraubenpumpe nach Anspruch 10, die insbesondere zur Vakuumerzeugung verwendet wird. Die Schraubenpumpe weist einen mit einem Motor verbundenen Motorrotor auf. Mit dem Zahnrad des Motorrotors kämmt ein erstes Synchronrad einer ersten Zahnradanordnung. Mit dem ersten Synchronrad kämmt ein zweites Synchronrad einer zweiten Zahnradanordnung. Erfindungsgemäß ist die erste Zahnradanordnung wie vorstehend beschrieben ausgebildet und vorteilhaft weitergebildet. Besonders bevorzugt ist es, dass zusätzlich zu der ersten Zahnradanordnung auch die zweite Zahnradanordnung wie vorstehend beschrieben ausgebildet bzw. weitergebildet ist.

Nachfolgend wird die Erfindung an Hand bevorzugter Ausführungsformen unter Bezugnahme auf die anliegenden Zeichnungen näher erläutert.

Es zeigen:
- Fig. 1: eine schematische Schnittansicht einer Zahnradanordnung,
- Fig. 2: eine schematische Schnittansicht entlang der Linie II-II in Fig. 1 und
- Fig. 3: eine schematische Schnittansicht einer Getriebeanordnung.

Die Zahnradanordnung 10 weist ein Zahnrad 12 auf, das auf einer Welle 14 angeordnet ist. Ferner ist auf der Welle 14 eine Scheibe 16 angeordnet. Im dargestellten Ausführungsbeispiel ist das Zahnrad 12 sowie die Scheibe 16 gemeinsam über eine Mutter 18 gehalten, wobei die Scheibe 16 gegen eine innere Lagerschale 20 eines Kugellagers 22 drückt.

Mit dem Zahnrad 12 kämmt ein Zahnrad 24, das beispielsweise mit einem Motor verbunden ist. Ferner kämmt mit dem Zahnrad 12 ein weiteres Zahnrad 26, das auf einer Welle 28 gehalten ist. Bei der Verwendung der Zahnradanordnung für eine Schraubenpumpe handelt es sich bei den Wellen 14, 28 um die beiden Synchronwellen, die über die beiden Zahnräder 12, 26 synchronisiert sind.

Zur Schmiermittelzufuhr weist die Welle 14 eine Mittelbohrung 30 sowie mit der Mittelbohrung 30 verbundene Radialbohrungen 32 auf. Die Radialbohrungen 32 weisen jeweils eine Austrittsöffnung 34 auf, die an einem Wellenumfang 36 der Welle 14 vorgesehen sind.

Mit den Austrittsöffnungen 34 ist ein ringförmig ausgebildeter Sammelraum 38 verbunden. Der Sammelraum 38 ist durch die Scheibe 16 und das benachbart zur Scheibe 16 angeordnete Zahnrad 12 ausgebildet. In radialer Richtung ist der Sammelraum 38 sich verjüngend ausgebildet und mündet in einem zwischen der Scheibe 16 und dem Zahnrad 12 kreisringförmig ausgebildeten Radialspalt 40.

In radialer Richtung schließt sich an den Radialspalt 40 eine ebenfalls kreisringförmige Staukammer 42 an. Die Staukammer 42 ist durch einen ringförmigen Ansatz 44 der Scheibe 16 sowie einen korrespondierenden Ansatz 46 an dem Zahnrad 24 bzw. einem korrespondierenden Ansatz 48 an dem Zahnrad 26 ausgebildet. Durch das Vorsehen der Staukammer ist gewährleistet, dass das durch den Radialspalt 40 gefördert Schmiermittel in einem Bereich 50 der Zähne bereitgestellt wird und im Wesentlichen in Richtung eines Pfeils 52 durch die Zahnzwischenräume strömt.

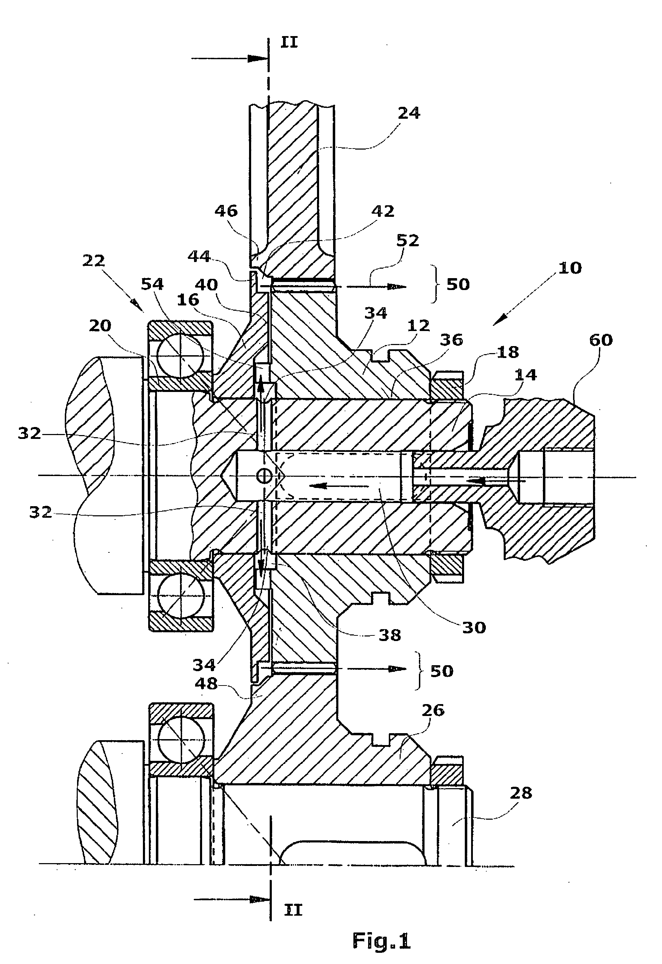

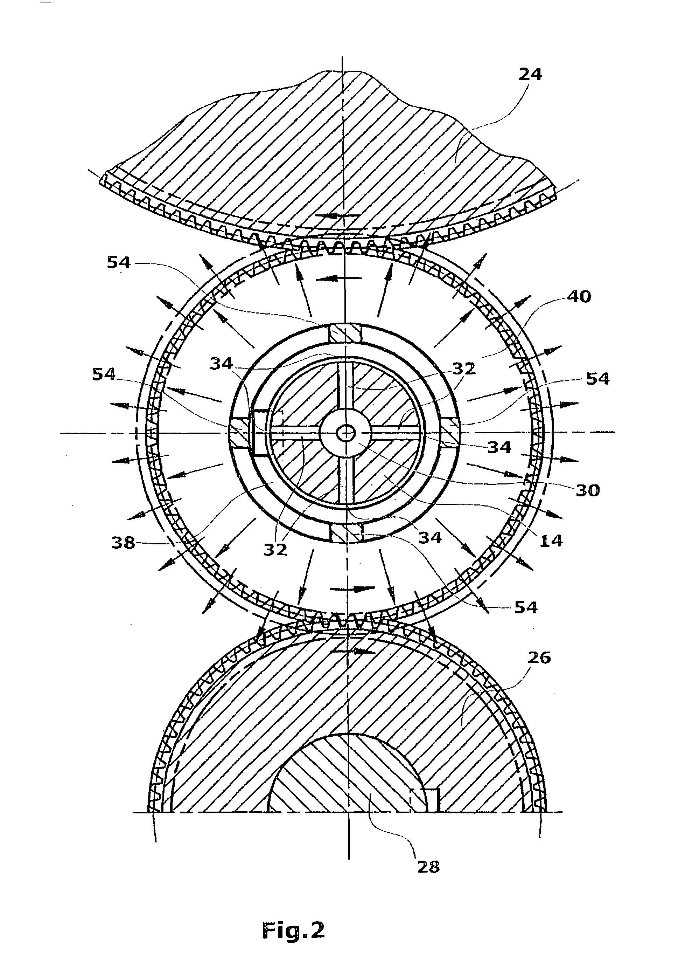

Zur Ausbildung des Ringspaltes 40 befindet sich zwischen der Scheibe 16 und dem Zahnrad 12 ein Abstandshalter 54 (Fig. 1), der im dargestellten Beispiel als freigefräster Steg des Zahnrades 12 ausgebildet ist. Im dargestellten Ausführungsbeispiel sind vier Abstandshalter 54 (Fig. 2) vorgesehen. Die Abstandhalter 54 sind hierbei jeweils in radialer Richtung gegenüberliegend zu den Austrittsöffnungen 34 der radial verlaufenden Kanäle 32 angeordnet.

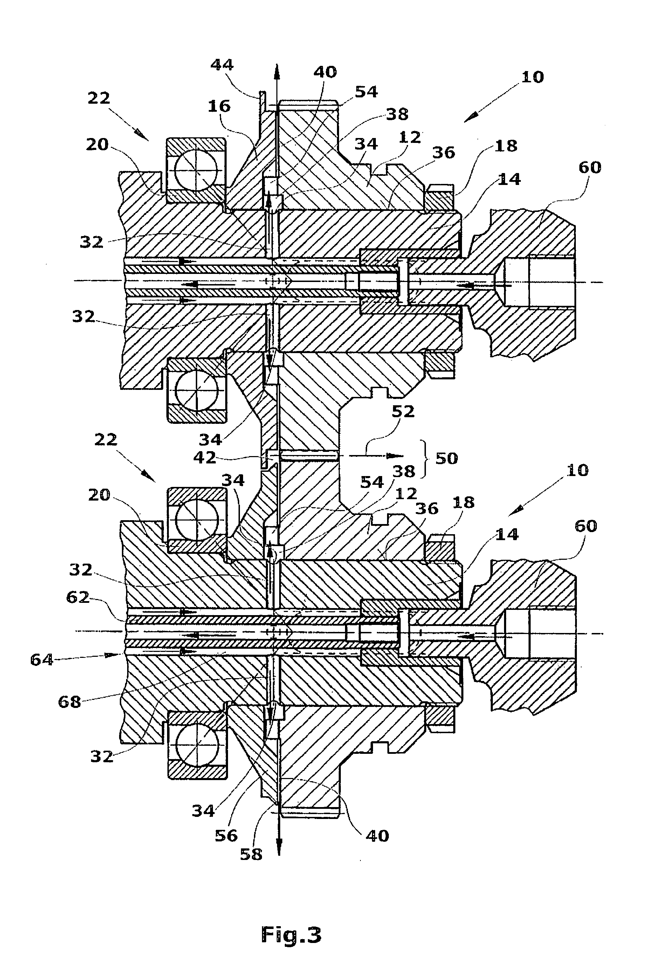

In der in Fig. 3 dargestellten Getriebeanordnung, die zwei der vorstehend beschriebenen Zahnradanordnung ähnliche Zahnradanordnungen aufweist, sind identische oder ähnliche Bauteile mit den selben Bezugszeichen gekennzeichnet.

Ein wesentlicher Unterschied der in Fig. 3 dargestellten Getriebeanordnung besteht darin, dass die Staukammer 42 durch die beiden Scheiben 16, 56 ausgebildet ist. Hierbei weist eine der beiden Scheiben, im dargestellten Ausführungsbeispiel die Scheibe 16, den radial verlaufenden Ansatz 44 auf. Die andere Scheibe 56 weist einen derartigen Ansatz nicht auf. Vorzugsweise weist die Scheibe 56 einen Ansatz 58 mit keilförmigem Querschnitt auf. Durch den Absatz 58 erfolgt ein Leiten des in der Staukammer 42 befindlichen Schmiermittels in Richtung der Zähne der beiden kämmenden Zahnräder 12.

Ferner ist in dem in Fig. 3 dargestellten Ausführungsbeispiel die Schmiermittelzufuhr unterschiedlich ausgebildet, wobei auch eine an Hand der Fig. 1 dargestellte Schmiermittelzufuhr möglich ist. In dem in Fig. 3 dargestellten Ausführungsbeispiel erfolgt eine Schmiermittelzufuhr zunächst über ein Zuführelement 60 in ein Rohr 62. Das Rohr 62 ist in einer Mittelbohrung 64 der Welle angeordnet und weist einen gegenüber dem Innendurchmesser der Mittelbohrung 64 geringeren Außendurchmesser auf, so dass ein Spalt 68 ausgebildet ist. Mit dem Spalt 68 sind sodann wiederum die radial verlaufenden Bohrungen 32 verbunden. Auf diese Weise kann das in das Rohr 62 geförderte Öl einer zusätzlichen Funktion (z. B. Lagerschmierung, indem ein Teil des Öles abgezweigt wird) zugeführt werden, bevor es durch den Ringkanal 64 an die Radialbewegungen 32 gelangt.

## Patentansprüche

1. Zahnradanordnung für ein Getriebe, insbesondere für ein Schraubenpumpen-Getriebe, mit
einem mit einer Welle (14) drehfest verbundenen Zahnrad (12), und
einem in der Welle (14) vorgesehenen Kanalsystem (30, 32; 62, 68, 32) zur Schmierstoffdurchleitung mit mindestens einer am Wellenumfang (36) angeordneten Austrittsöffnung (34),
**dadurch gekennzeichnet, dass**
auf der Welle (14) benachbart zum Zahnrad (12) eine Scheibe (16) derart angeordnet ist, dass zumindest teilweise zwischen dem Zahnrad (12) und der Scheibe (16) ein Radialspalt (40) zur Schmierstoffzufuhr ausgebildet ist, der mit der mindestens einen Austrittsöffnung (34) verbunden ist und im Bereich (50) der Zahnrad-Zähne endet.

2. Zahnradanordnung nach Anspruch 1, **gekennzeichnet durch** eine sich an den Radialspalt (40) anschließende Staukammer (42).

3. Zahnradanordnung nach Anspruch 2, **dadurch gekennzeichnet, dass** eine erste Staukammerwand durch einen an der Scheibe (16) vorgesehenen Ansatz (44) gebildet ist.

4. Zahnradanordnung nach Anspruch 2 oder 3, **dadurch gekennzeichnet, dass** eine zweite Staukammerwand durch einen an einem kämmenden Zahnrad (24, 26) vorgesehenen Ansatz ausgebildet ist.

5. Zahnradanordnung nach einem der Ansprüche 1 - 4, **dadurch gekennzeichnet, dass** der Radialspalt (40) ringförmig ausgebildet ist.

6. Zahnradanordnung nach einem der Ansprüche 1 - 5, **dadurch gekennzeichnet, dass** zwischen dem Zahnrad (12) und der Scheibe (16) Abstandshalter (54) vorgesehen sind.

7. Zahnradanordnung nach Anspruch 6, **dadurch gekennzeichnet, dass** zumindest einer der Abstandshalter (54) in radialer Richtung der mindestens einen Auslassöffnung (34) gegenüberliegend angeordnet ist.

8. Zahnradanordnung nach einem der Ansprüche 1 - 7, **dadurch gekennzeichnet, dass** zwischen der mindestens einen Auslassöffnung (34) und dem Radialspalt (40) ein insbesondere ringförmiger Sammelraum (38) vorgesehen ist.

9. Getriebeanordnung, insbesondere für Schraubenpumpen, mit zwei kämmenden Zahnradanordnungen nach einem der Ansprüche 1 - 8, wobei die beiden Scheiben (16, 56) eine gemeinsame Staukammer (42) ausbilden.

10. Schraubenpumpe mit
einem mit einem Motor verbundenen Motorrotor und dem zugehörigen Zahnrad (24),
einem mit dem Motorrotor-Zahnrad (24) kämmenden ersten Synchronrad (12), einer ersten Zahnradanordndung (10) und
einem mit dem ersten Synchronrad (12) kämmenden zweiten Synchronrad (26),
**dadurch gekennzeichnet, dass**
die erste Zahnradanordnung nach einem der Ansprüche 1 - 8 ausgebildet ist.

11. Schraubenpumpe nach Anspruch 10, **dadurch gekennzeichnet, dass** zusätzlich die zweite Zahnradanordnung nach einem der Ansprüche 1 - 8 ausgebildet ist.

## Claims

1. A gear arrangement for a transmission, in particular for a screw pump transmission, comprising
a gear (12) secured to a shaft (14) for rotation therewith,
a channel system (30, 32; 62, 68, 32) for the passage of lubricant having at least one outlet opening (34) provided in the circumference (36) of the shaft,
**characterized in that**
a disk (16) is arranged on the shaft (14) adjacent the gear (12) such that a radial gap (40) is formed at least partly between the gear (12) and the disk (16) for the supply of lubricant, which gap communicates with the at least one outlet opening (34) and terminates in the region (50) of the gear teeth.

2. The gear arrangement of claim 1, **characterized by** a storage chamber (42) adjoining the radial gap (40).

3. The gear arrangement of claim 2, wherein a first storage chamber wall is formed by a projection (44) provided on the disk (16).

4. The gear arrangement of claim 2 or 3, wherein a second storage chamber wall is formed by a projection provided on a meshing gear (24, 26).

5. The gear arrangement of one of claims 1 - 4, wherein the radial gap (40) is of annular design.

6. The gear arrangement of one of claims 1 - 5, wherein spacers (54) are provided between the gear (12) and the disk (16).

7. The gear arrangement of claim 6, wherein at least one of the spacers (54) is situated radially opposite the at least one outlet opening (34).

8. The gear arrangement of one of claims 1 - 7, wherein an especially annular collecting chamber (38) is provided between the at least one outlet opening (34) and the radial gap (40).

9. A transmission arrangement, in particular for screw pumps, comprising two meshing gear arrangements of one of claims 1-8, wherein the two disks (16, 56) form a common storage chamber (42).

10. A screw pump comprising
a motor rotor connected with a motor and an associated gear (24),
a first synchronous gear (12) meshing with the motor rotor gear (24) of a first gear arrangement (10), and
a second synchronous gear (26) meshing with the first synchronous gear (12),
**characterized in that**
the first gear arrangement is configured according to one of claims 1-8.

11. The screw pump of claim 10, wherein, in addition, the second gear arrangement is configured according to one of claims 1-8.

## Revendications

1. Système de roué dentée pur une transmission, en particulier pour une transmission d'une pompe à vis, comprenant
une roue dentée (12) attachée à un arbre (14) de façon résistant à la torsion, et
un système de conduit (30, 32; 62, 68, 32) dans l'arbre (14) pour le passage de lubrifiant comprenant au moins une ouverture de sortie (34) disposée dans la circonférence (36) de l'arbre,
**caractérisé en ce que**
une disque (16) est disposée sur l'arbre (14), adjacent la roue dentée (12), de façon qu'un interstice radial (40) pour l'amenée de lubrifiant est formé au moins en partie entre la roue dentée (12) et la disque (16), l'interstice étant en communication avec l'au moins une ouverture de sortie (34) et terminant dans la région (50) des dents de la roue dentée.

2. Système de roue dentée selon la revendication 1, **caractérisé par** une chambre de retenue (42) se joignant à l'interstice radial (40).

3. Système de roue dentée selon la revendication 2, **caractérisé en ce que** une première paroi de la chambre de retenue est formée par un téton (44) prévu sur la disque (16).

4. Système de roue dentée selon la revendication 2 ou 3, **caractérisé en ce qu'**une deuxième paroi de la chambre de retenue est formée par un téton prévu sur une roue dentée en engrenage (24, 26).

5. Système de roue dentée selon une des revendications 1 à 4, **caractérisé en ce que** l'interstice radial (40) est annulaire.

6. Système de roue dentée selon une des revendications 1 à 5, **caractérisé en ce que** des entretoises (54) sont prévues entre la roue dentée (12) et las disque (16).

7. Système de roue dentée selon la revendication 6, **caractérisé en ce qu'**au moins une des entretoises (54) est disposée radialement en vis-à-vis de l'au moins une ouverture de sortie (34).

8. Système de roue dentée selon la revendication 1 à 7, **caractérisé en ce qu'**une chambre de collection (38), en particulier en forme annulaire, est prévue entre l'au moins une ouverture de sortie (34) et l'interstice radial (40).

9. Système de transmission, en particulier pour pompes à vis, comprenant deux systèmes de roues dentées en engrenage selon une des revendications 1-8, les deux disques (16, 56) formant une chambre de retenue (42) commune.

10. Pompe à vis comprenant
un rotateur de moteur relié à un moteur, et la roue dentée (24) respective,
une première roue de synchronisation (12) en engrenage avec la roue dentée due moteur (24), un premier système de roue dentée (10) et
une deuxième roue de synchronisation (26) en engrenage avec la première roue de synchronisation (12),
**caractérisé en ce que**
le premier système de roue dentée est configuré selon une des revendications 1 à 8.

11. Pompe à vis selon la revendication 10, **caractérisé en ce que**, de plus, le deuxième système de roue dentée est configuré selon une des revendications 1 à 8.
